# DEMANDE DE BREVET EUROPEEN

(11) **EP 0 571 279 A1**
(43) Date de publication de la demande: **24.11.1993**
(21) Numéro de dépôt: 93401284.0
(22) Date de dépôt: 18.05.1993
(51) Int. Cl.: G02B 6/44, G02B 6/04

(54) **Elément optique multifibres de câble**

(30) Priorité: 22.05.1992 FR 9206297
(71) Demandeur: ALCATEL CABLE, F-92111 Clichy Cédex (FR)
(72) Inventeur: Joly, Bertrand, F-92310 Sevres (FR)
(74) Mandataire: Pothet, Jean Rémy Emile Ludovic

(57) **Abrégé**

L'élément optique multifibres de câble comporte un ensemble de fibres optiques.

Il est caractérisé en ce que ledit ensemble de fibres (2) est de structure dite semi-compacte et comporte sur sa longueur des premières portions (4) dans lesquelles lesdites fibres sont liées entre elles dans un enrobage (3) et des deuxièmes portions (5) alternées avec les premières et dans lesquelles les fibres sont libres.

Application câble optique ou partie optique d'un câble d'énergie.

## Description

La présente invention concerne les câbles optiques ou les câbles électriques incorporant une partie optique, qui comportent une pluralité de fibres optiques agencées en au moins un ensemble dans chaque câble optique concerné ou la partie optique incorporée à un câble électrique.

De manière connue, les fibres optiques d'un câble optique ou de la partie optique d'un câble électrique peuvent être agencées dans chaque ensemble en une structure dite lâche de fibres individuelles libres les unes relativement aux autres ou en une structure dite compacte de fibres alors liées les unes aux autres, par exemple sous forme d'un ruban plat ou d'un ensemble non plan. Ces deux types de structures connues ont leurs propres avantages et répondent en conséquence à des exigences différentes d'application. En particulier, les structures lâches permettent de maintenir à un haut niveau la qualité de transmission initiale des fibres individuelles. Elles sont en outre peu sensibles à la torsion mais peuvent l'être en revanche davantage à la traction. Les structures compactes assurent quant à elles une meilleure protection des fibres que les structures lâches. Elles présentent en outre une bonne résistance à la traction, mais peuvent présenter des risques à la torsion.

Indépendamment des avantages ci-dessus de l'une ou de l'autre de ces structures, les structures compactes ont l'avantage supplémentaire de permettre les raccordements aisés et rapides de leurs fibres en ruban ou arrangement analogue, alors que les problèmes d'organisation, de coupe, de dénudage et de raccordement, ainsi que le temps et les accessoires nécessaires pour ces opérations, sont comparativement très pénalisants pour les ensembles de fibres individuelles. En effet, les procédés actuels de raccordement de fibres en ruban, réalisés par soudure ou connectique d'ensemble, permettent de relier les fibres du ruban, pouvant comporter jusqu'à douze fibres et plus, à autant d'autres fibres d'un autre ruban ou d'un cordon optique de brassage, en un temps réduit de l'ordre de 10 à 15 minutes. Ils tiennent compte à cet effet des dispositions relatives des fibres les unes par rapport aux autres dans le ruban, en tirant profit essentiellement des caractéristiques géométriques précises de chaque fibre dont le diamètre extérieur peut être maîtrisé à 2 microns près et l'excentrement du coeur à moins de 1 micron, à ce jour.

En regard des avantages de chacune de ces structures connues, de manière générale, on retient en pratique l'une ou l'autre de ces structures selon chaque application spécifique concernée.

Ainsi, les câbles optiques de télécommunication utilisés pour les liaisons interurbaines ou sous-marines et présentant une faible capacité de fibres optiques de hautes performances, ainsi que les parties optiques incorporées aux câbles électriques et présentant également une faible capacité de fibres, sont du type à structure lâche. En revanche, les câbles optiques de télécommunication à grande capacité de fibres optiques, qui sont notamment utilisés pour les liaisons de transport en milieu urbain et nécessitent des raccordements d'ensembles de fibres, sont du type à structure compacte de leurs fibres. Enfin les câbles optiques de télécommunication de capacité moyenne, tels que ceux utilisés pour les liaisons de distribution, nécessitant des dérivations, le brassage et le raccordement de leurs fibres à des équipements actifs ou passifs, sont tantôt du type à structure lâche, tantôt du type à structure compacte.

La présente invention a pour but de réaliser un élément optique multifibres, dont les fibres sont agencées en un ensemble de structure dite semi-compacte, pour bénéficier des avantages de la structure lâche et de ceux de la structure compacte précitées, sans pour autant présenter leurs inconvénients.

Elle a pour objet un élément optique multifibres de câble, comportant un ensemble de fibres optiques, caractérisé en ce que ledit ensemble est de structure dite semi-compacte et comporte sur sa longueur des premières portions, séparées les unes des autres et dans lesquelles lesdites fibres sont liées les unes aux autres dans un enrobage, et des deuxièmes portions, alternées avec les premières et dans lesquelles lesdites fibres sont libres les unes par rapport aux autres.

L'élément optique présente en outre au moins l'une des caractéristiques additionnelles suivantes :
- les premières portions ont une première longueur limitée et les deuxièmes portions une deuxième longueur également limitée, lesdites première et deuxième longueurs étant égales et alors de préférence de l'ordre de 50 cm, ou étant différentes et pondérées, selon les applications des éléments concernés;
- les premières portions définissent des transitions les limitant en les séparant des deuxièmes portions, qui sont en biais ou transversales à l'axe longitudinal de l'élément et peuvent être, en outre, étagées, ou qui sont courbes et homothétiques les unes des autres ou symétriques deux à deux;
- les transitions sont nettes ou progressives.

Les caractéristiques et avantages de la présente invention ressortiront de la description faite ci-après d'un mode préféré de réalisation et de variantes, qui en découlent, illustrés dans les dessins ci-annexés.

Dans ces dessins :
- la figure 1 représente schématiquement une vue de dessus d'un tronçon d'élément optique multifibres, selon la présente invention,
- les figures 2 à 6 sont des variantes données en regard de cette figure 1,
- les figures 7 et 8 sont deux vues en coupe longitudinale du tronçon d'élément selon la figure 1, ces deux coupes passant par l'une des fibres optiques et correspondant à deux variantes de réalisation.

Dans ces figures, l'élément optique est désigné sous la référence globale 1 et comporte une pluralité de fibres optiques 2 agencées en un ensemble plat de structure dite semi-compacte. Les fibres optiques 2 sont gainées et identiques les unes aux autres. En considérant selon son axe longitudinal cet élément optique 1, dont on n'a représenté qu'un tronçon, ses fibres 2 sont tantôt toutes liées entre elles dans un eurobage 3, à la manière d'un ruban plat classique, dans des premières portions 4 limitées et séparées les unes des autres de l'élément, tantôt indépendantes et libres les unes des autres dans des deuxièmes portions 5 alternées avec les premières.

Les premières portions 4 ont de préférence sensiblement la même longueur L et les deuxièmes 4 sensiblement la même longueur L'. En général, de manière avantageuse les longueurs L et L' sont sensiblement égales et typiquement de 50 cm environ. Elles peuvent cependant être différentes les unes des autres, notamment en vue de traitements spécifiques à effectuer sur leurs fibres selon les applications particulières des éléments.
Cet ensemble ou élément optique 1 de structure semi-compacte peut constituer un câble optique plat alors simplement revêtu d'une gaine extérieure souple de protection, non représentée, enfilée sur l'ensemble et prenant appui sur les bords de l'enrobage 3 des premières portions 4. Il peut aussi constituer l'élément optique ou l'un des éléments optiques identiques de câbles optique du type à un ou plusieurs rubans de fibres optiques, en se substituant dans ce câble aux rubans traditionnels de fibres optiques qui sont montés individuellement ou empilés dans les rainures d'un jonc porteur ou dans un tube de protection. Il peut également constituer le ou les éléments optiques, alors en nombre restreint, de la partie optique incorporée à des câbles électriques d'énergie.

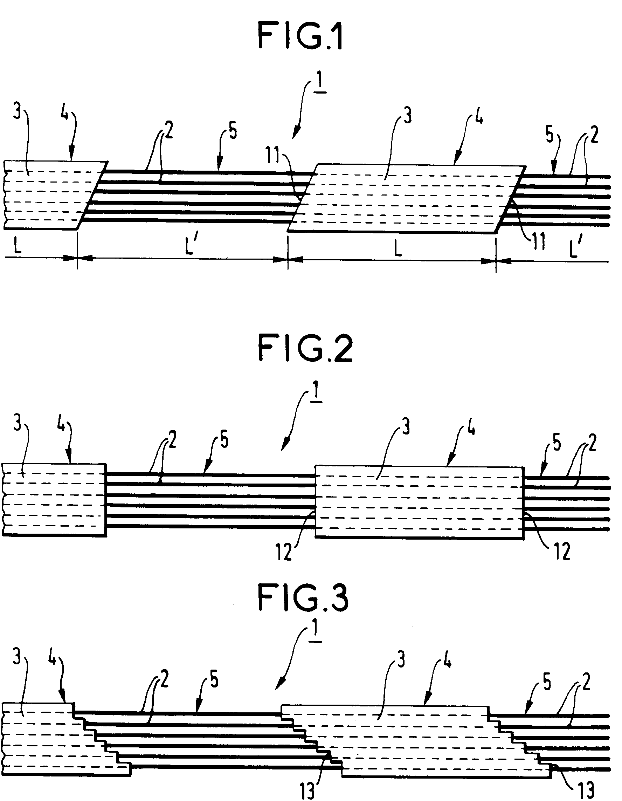

Les différences essentielles entre la réalisation selon la figure 1 et les variantes des figures 2 à 6 portent sur les transitions entre les premières portions 4 et les deuxièmes portions 5.

Dans la figure 1, ces transitions notées 11 sont en biais sur l'axe longitudinal de l'élément optique.

Dans la figure 2, ces transitions 12 sont sensiblement transversales à l'axe longitudinal de l'élément optique.

Dans la figure 3, ces transitions 13 sont étagées, en séparant en sous-ensembles l'ensemble des fibres de l'élément. Dans cette variante les transitions 13 sont étagées transversalement à l'axe longitudinal de l'élément et les sous-ensembles chacun de deux fibres pour permettre un accès plus aisé à chaque paire de fibres. Dans une autre variante, non représentée, les transitions étagées peuvent être en biais sur l'axe longitudinal de l'élément et/ou séparer l'ensemble de fibres en sous-ensembles chacun de plusieurs paires de fibres.

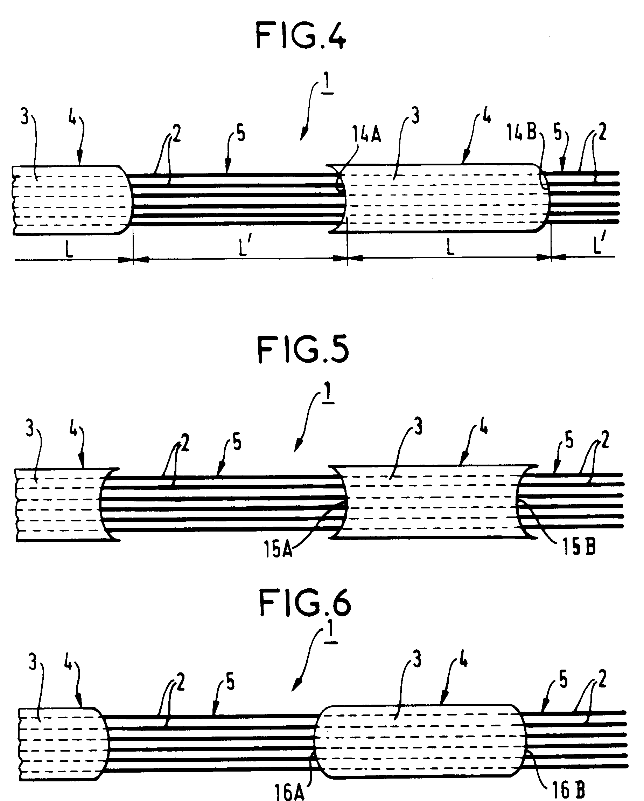

Dans la figure 4, ces transitions notées 14A et 14B sont courbes et sensiblement homothétiques les unes des autres. Dans la figure 5, les transitions notées 15A et 15B sont également courbes, comme celles de la figure 4, mais sont pour les deux transitions successives limitant chaque première portion 4, sensiblement symétriques l'une de l'autre. Leur surface concave est dans cette variante tournée vers chaque deuxième portion 5 attenante à la première portion 4 considérée.

Dans la figure 6, les transitions notées 16A et 16B sont courbes et symétriques deux à deux comme celles de la figure 5, mais ont leur surface convexe tournée vers chaque deuxième portion de fibres libres.
Parmi ces modes de réalisation, donnés à titre d'exemples, les transitions linéaires mais biaises telles que 11 sont préférables à celles 12 transversales à l'axe longitudinal, du fait d'une relative fragilité, au pliage de l'élément, de ces dernières transitions 12. Les transitions courbes 14, 15 et 16 offrent sensiblement les mêmes avantages que les transitions 11 en regard du pliage de l'élément et permettent d'accéder plus aisément aux fibres individuelles ou paires de fibres de l'élément.

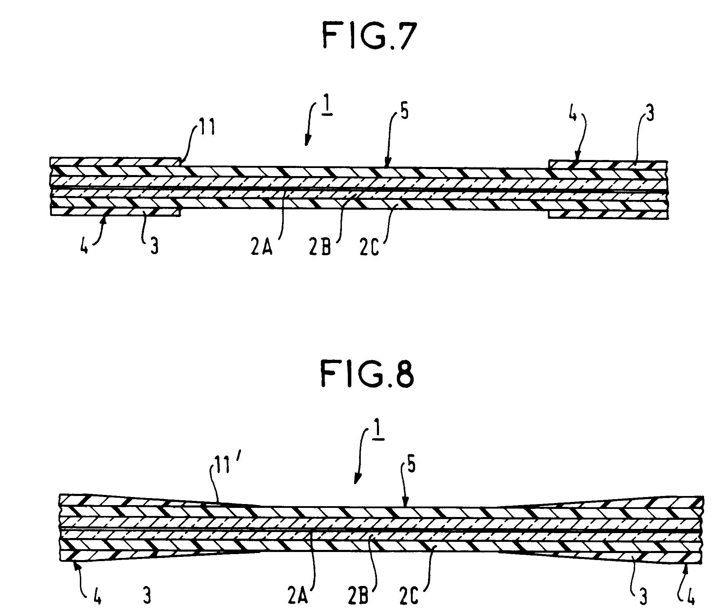

Les coupes longitudinales des figures 7 et 8 montrent deux variantes de réalisation de l'élément selon la figure 1. Elles passent par l'une des fibres gainées, dont on a illustré en 2A le coeur optique, en 2B la gaine optique et en 2C le revêtement primaire constituant la gaine de cette fibre. L'enrobage intermittent 3 des fibres est de préférence de même nature que leur revêtement primaire et en particulier en résine époxy. Les fibres gainées peuvent bien entendu recevoir un traitement pour leur identification individuelle avant leur mise en structure semi-compate.

La figure 7 montre que les transitions 11 limitant les portions 4 et les séparant des portions 5 sont nettes.
Elles sont ainsi obtenues par l'enrobage 3, dont l'épaisseur est sensiblement constante sur toute la longueur de chaque portion 4.

La figure 8 montre en variante que les transitions alors notées 11' sont par contre progressives. Elles sont obtenues par l'épaisseur progressivement réduite ou croissante des seules parties terminales de l'enrobage ayant par ailleurs une épaisseur sensiblement constante.

Les transitions 12 à 16, selon les figures 2 à 6 peuvent pareillement être nettes ou progressives.
L'élément optique 1, selon l'une ou l'autre de ces réalisations, est obtenu à partir d'une ligne de fabrication de ruban classique, comportant des filières d'enduction des fibres les unes aux autres suivies de moyens de réticulation ou polymérisation du matériau d'enduction (résine ou analogue), qui a simplement été adaptée. La ligne de fabrication adaptée résultante comporte alors en outre des moyens de soufflage et/ou d'interruption de réticulation ou polymérisation montés derrière les filières d'enduction, pour la formation des deuxièmes portions de fibres libres, ou des moyens de commande d'interruption momentanée d'enduction des fibres, contrôlant les filières pour la formation des seules premières portions de fibres liées les unes aux autres.

Les modes de réalisation ci-dessus de la structure semi-compacte par la résine réticulable ou polymérisable ne sont pas limitatifs. D'autres procédés utilisant d'autres techniques telles que l'extrusion de matériau thermoplastique peuvent être envisagés.

Cette structure semi-compacte peut se substituer avantageusement aux structures lâches et aux structures compactes dans les différentes applications possibles ou plus spécifiques de chacune de ces structures connues.

En effet, en plein câble, il suffit de se déplacer d'une longueur L ou L' pour rencontrer l'une ou l'autre des premières ou deuxièmes portions. Ceci permet la dérivation aisée d'une ou de plusieurs des fibres sur l'une des deuxièmes portions de fibres libres, pour desservir un abonné ou un groupe d'abonnés. Ceci permet aussi d'utiliser l'une des fibres ou une fibre supplémentaire de l'élément optique comme fibre test et de tester la continuité et/ou la qualité de transmission en un point ou plusieurs points de l'élément et du câble le comportant, par une mesure sur cette fibre test.
Cette structure semi-compacte de l'élément optique selon l'invention permet aussi de traiter de manière aisée et souple les terminaisons de câble, en stockant une longueur terminale comme prévu en général selon les règles de l'art. Cette longueur terminale est ici définie, en étant choisie au moins égale à la plus grande des longueurs L et L' et plus particulièrement égale à L + L', pour permettre de disposer d'une première et d'une deuxième portion et ainsi de réaliser à volonté le raccordement de masse ou l'épissurage individuel des fibres de chaque élément du câble.

Elle permet encore des facilités de repérage des fibres individuelles d'un élément de câble, indépendamment de leur identification individuelle, en branchant une source successivement aux fibres individuelles, sur une deuxième portion de l'élément, à l'une des extrémités de l'élément du câble, et en détectant le signal transmis, également sur une deuxième portion, à l'autre extrémité de l'élément.

Elle permet en outre l'épissurage, en un point intermédiaire de l'élément, de l'une de ses fibres à une autre de ses fibres, dans une deuxième portion, pour substituer une partie d'une fibre à une autre en cas de défaillance ou problème détecté.

## Revendications

**1-** Elément optique multifibres de câble, comportant un ensemble de fibres optiques, caractérisé en ce que ledit ensemble est de structure dite semi-compacte et comporte sur sa longueur des premières portions (4), séparées les unes des autres et dans lesquelles lesdites fibres (2) sont liées les unes aux autres dans un enrobage (3), et des deuxièmes portions (5), alternées avec les premières et dans lesquelles lesdites fibres (2) sont libres les unes par rapport aux autres.

**2-** Elément optique selon la revendication 1, caractérisé en ce que lesdites premières portions (4) sont d'une première longueur limitée (L) et lesdites deuxièmes portions d'une deuxième longueur limitée (L').

**3-** Elément optique selon la revendication 2, caractérisé en ce que ladite première et ladite deuxième longueur (L, L') sont sensiblement égales et en particulier choisies de l'ordre de 50 cm.

**4-** Elément optique selon la revendication 2, caractérisé en ce que ladite première longueur (L) est différente de ladite deuxième longueur (L').

**5-** Elément optique selon l'une des revendications 1 à 4, caractérisé en ce qu'il présente des transitions biaises (11, 11') par rapport à l'axe longitudinal de l'élément, limitant lesdites premières portions en les séparant des deuxièmes.

**6-** Elément optique selon l'une des revendications 1 à 4 caractérisé en ce qu'il présente des transitions (12) transversales à l'axe longitudinal de l'élément, limitant lesdites premières portions en les séparant des deuxièmes.

**7-** Elément optique selon l'une des revendications 1 à 4, caractérisé en ce qu'il présente des transitions étagées (13) limitant lesdites premières portions en les séparant des deuxièmes et en séparant à leur niveau l'ensemble des fibres en sous-ensembles correspondant aux étages.

**8-** Elément optique selon l'une des revendications 1 à 4, caractérisé en ce qu'il présente des transitions courbes et homotéthiques les unes des autres (14A, 14B; 15A, 15B) limitant lesdites premières portions en les séparant des deuxièmes.

**9-** Elément optique selon l'une des revendications 1 à 4, caractérisé en ce qu'il présente des transitions courbes et symétriques deux à deux (16A, 16B), limitant lesdites premières portions en les séparant des deuxièmes.

**10-** Elément optique selon l'une des revendications 5 à 9 caractérisé en ce que lesdites transitions limitant lesdites premières portions (4) en les séparant des deuxièmes sont nettes ou progressives.
